# EUROPÄISCHE PATENTSCHRIFT

(11) **EP 0 374 421 B1**
(45) Veröffentlichungstag und Bekanntmachung des Hinweises auf die Patenterteilung: **29.12.1993**
(21) Anmeldenummer: 89119574.5
(22) Anmeldetag: 21.10.1989
(51) Int. Cl.: B60J 7/22

(54) **Windabweiser für Schiebedächer, herausnehmbare Dachabschnitte oder dergleichen von Kraftfahrzeugen**
Wind deflectors for motor vehicle roofs, removable roof segments or the like
Déflecteurs d'air pour toits ouvrants, pour toits à panneaux amovibles ou similaires de véhicules automobiles

(30) Priorität: 19.12.1988 DE 3842676
(43) Veröffentlichungstag der Anmeldung: 27.06.1990
(73) Patentinhaber: Dr.Ing.h.c. F. Porsche Aktiengesellschaft, 70435 Stuttgart (DE)
(72) Erfinder: Preiss, Michael, Dipl.-Ing., D-7143 Vaihingen/Enz-Aurich (DE)

(56) Entgegenhaltungen:
- DE-A- 3 415 361
- DE-U- 8 905 212
- FR-A- 2 431 383
- US-A- 4 291 912
- US-A- 4 662 671

## Beschreibung

Die Erfindung bezieht sich auf einen Windabweiser für Schiebedächer, herausnehmbare Dachabschnitte oder dergleichen von Kraftfahrzeugen gemäß dem Oberbegriff des Anspruchs 1.

Aus der DE-A-34 15 361 ist ein Kraftfahrzeug mit einem Schiebedach und einem schwenkbaren Windabweiser bekannt, wobei nach dem Öffnen des Schiebedachs der benachbart dem vorderen, querverlaufenden Randbereich des Dachausschnittes angeordnete Windabweiser selbsttätig eine hochgestellte, ausgefahrene Betriebsstellung einnimmt. Versuche mit derartigen Fahrzeugen haben ergeben, daß im Fahrbetrieb bei geöffnetem Schiebedach trotz ausgestelltem Windabweiser im Fahrgastraum störende Schwingungen auftreten, die sich als Geräusche, Ohrendruck oder durch ein Tür- bzw. Scheibenbeben bemerkbar machen. Diese Schwingungen (sie werden auch als Schiebedachwummern bezeichnet) sind von Fahrzeug zu Fahrzeug unterschiedlich und hängen u. a. von der Dachform, der Innenraumbelüftung, der Größe des Dachausschnittes und der gefahrenen Geschwindigkeit ab.

Ausgelöst werden diese Schwingungen dadurch, daß die über das Fahrzeugdach geleitete Luftströmung am vorderen querverlaufenden Rand des Dachausschnittes bzw. am Windabweiser abreißt und vor allem bei langsamer Fahrgeschwindigkeit nicht den Dachausschnitt überwindet, sondern in den darunterliegenden Fahrgastraum einströmt. Gleichzeitig wird jedoch durch die erhöhte Strömungsgeschwindigkeit über dem Dachausschnitt ein Unterdruck im Fahrgastraum erzeugt, der bestrebt ist, von dort Luft abzusaugen. Beide Strömungen bewirken störende Wirbel, die sich periodisch ablösend bilden. Dadurch erfolgt eine Pulsation der Luftsäule im Fahrgastraum, die nahe der Resonanzfrequenz zu erheblicher Belästigung (Geräusche, Ohrendruck) führt.

Aufgabe der Erfindung ist es, an einem Kraftfahrzeug mit einem Schiebedach und einem Windabweiser solche Vorkehrungen zu treffen, daß im Fahrbetrieb bei geöffnetem Dach das Auftreten dieser störenden Schwingungen (Schiebedachwummern) im Fahrgastraum vermieden wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche. Die mit der Erfindung hauptsächlich erzielten Vorteile sind darin zu sehen, daß durch die Anordnung eines zusätzlichen Luftleitelementes geringer Breite am Windabweiser das Auftreten von störenden Schwingungen im Fahrgastraum zuverlässig vermieden wird. Vorzugsweise ist das in der Betriebsstellung den Windabweiser nach oben hin überragende Luftleitelement benachbart einer Mittellängsebene des Kraftfahrzeuges angeordnet. Das Luftleitelement lenkt über seine Breitenerstreckung die Strömung höher ab, so daß der Dachausschnitt überwunden wird. Beiderseits des Luftleitelements wird die Luft ebenfalls noch über den Dachausschnitt hinwegbewegt. In den seitlich außenliegenden Zonen des Dachausschnitts bleibt die Strömung durch das zusätzliche Luftleitelement nahezu unbeeinflußt, doch sie kann sich nicht mehr zu den großen periodischen Ablösungen vereinigen. Das zusätzliche Luftleitelement stört also die Wirbelbildung, teilt sie und verhindert das periodische Schwingen der Luftsäule im Fahrgastraum.

Ein Ausführungsbeispiel ist in der Zeichnung dargestellt und wird im folgenden näher erläutert.
Es zeigt
- Fig. 1: eine perspektivische Teilansicht eines mit einem Schiebedach und einem Windabweiser ausgerüsteten Kraftfahrzeugdaches,
- Fig. 2: eine Teildraufsicht auf den Windabweiser mit dem erfindungsgemäßen Luftleitelement,
- Fig. 3: einen Schnitt nach der Linie III-III der Fig. 2, wobei sich der Windabweiser und das Luftleitelement in einer eingefahrenen Ruhestellung befinden,
- Fig. 4: einen Schnitt entsprechend Fig. 3, wobei der Windabweiser und das Luftleitelement ihre ausgefahrene Betriebsstellung einnehmen,
- Fig. 5: einen Schnitt entsprechend Fig. 3 mit einer modifizierten Ausführungsform des Windabweisers,
- Fig. 6: einen Schnitt entsprechend Fig. 3 mit einer weiteren Ausführungsform eines Windabweisers und eines Luftleitelementes,
- Fig. 7: einen Schnitt entsprechend Fig. 3 mit einer weiteren Ausführungsform eines Windabweisers und eines Luftleitelementes.

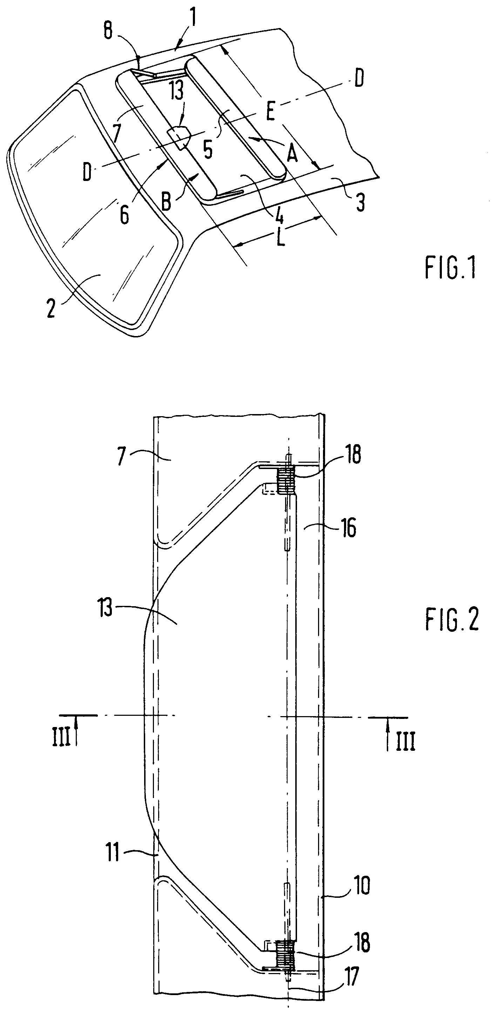

Von einem Kraftfahrzeug 1 mit einem Schiebedach, einem herausnehmbaren Dachabschnitt oder dergleichen ist in Fig. 1 lediglich eine Windschutzscheibe 2 und ein Dachbereich 3 mit einem etwa rechteckförmigen Dachausschnitt 4 dargestellt, wobei der Dachausschnitt 4 durch einen Deckel bzw. einen Schiebedeckel 5 verschließbar ist. In Fig. 1 befindet sich der Schiebedeckel 5 in seiner zurückgefahrenen Offenstellung A, wogegen ein benachbart dem vorderen, querverlaufenden Rand 6 des Dachausschnittes 4 angeordneter Windabweiser 7 seine ausgefahrene, hochgestellte Betriebstellung B einnimmt.

Der Windabweiser 7 wirkt an seinen beiden außenliegenden Endbereichen in an sich bekannter Weise mit einem Ausstellmechanismus 8 zusammen, dergestalt, daß der Windabweiser 7 beim Öffnen des Schiebedeckels selbsttätig in die Betriebsstellung B bewegt wird, wogegen er beim Schließen des Schiebedeckels selbsttätig in seine eingefahrene Ruhestellung C gebracht wird. Der Windabweiser 7 ist in der Draufsicht gesehen, dem Formverlauf des querverlaufenden vorderen Randes 6 des Dachausschnittes 4 angepaßt.

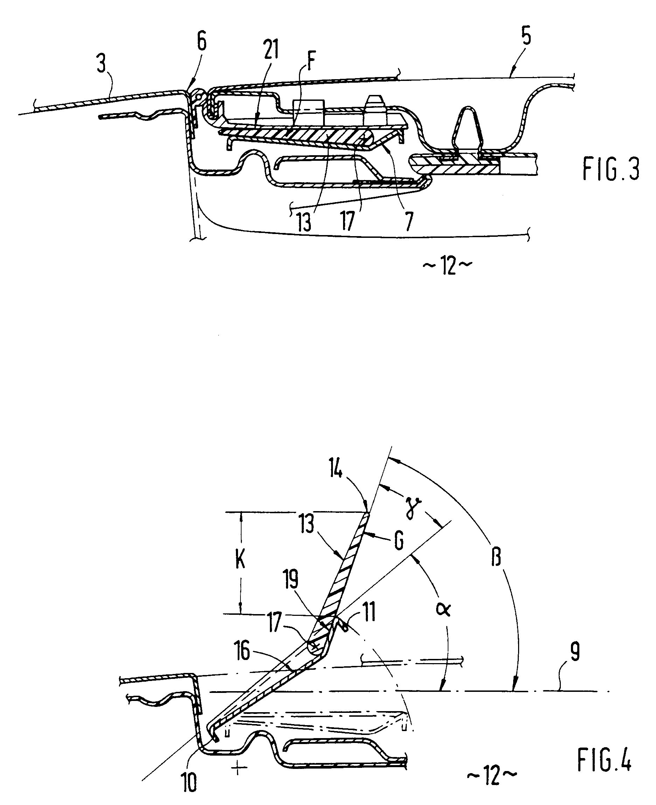

In der Betriebsstellung B ist der Windabweiser 7 um einen Winkel α zu einer horizontalen Hilfsebene 9 angestellt (Fig. 4). Im Ausführungsbeispiel ist der Windabweiser 7 aus Alu- oder Stahlblech gefertigt. Am oberen und unteren Ende weist er jeweils eine etwa rechtwinkelige Abstellung 10, 11 auf, die zu einem Fahrgastraum 12 des Kraftfahrzeuges 1 hin gerichtet ist.

Damit im Fahrbetrieb im Fahrgastraum 12 bei offenem Schiebedach keine unangenehmen Schwingungen (Schiebedachwummern) auftreten, ist am Windabweiser 7 ein zusätzliches Luftleitelement 13 geringer Breite angeordnet, das in der Betriebsstellung B des Windabweisers 7 diesen nach oben hin um ein Maß K überragt.

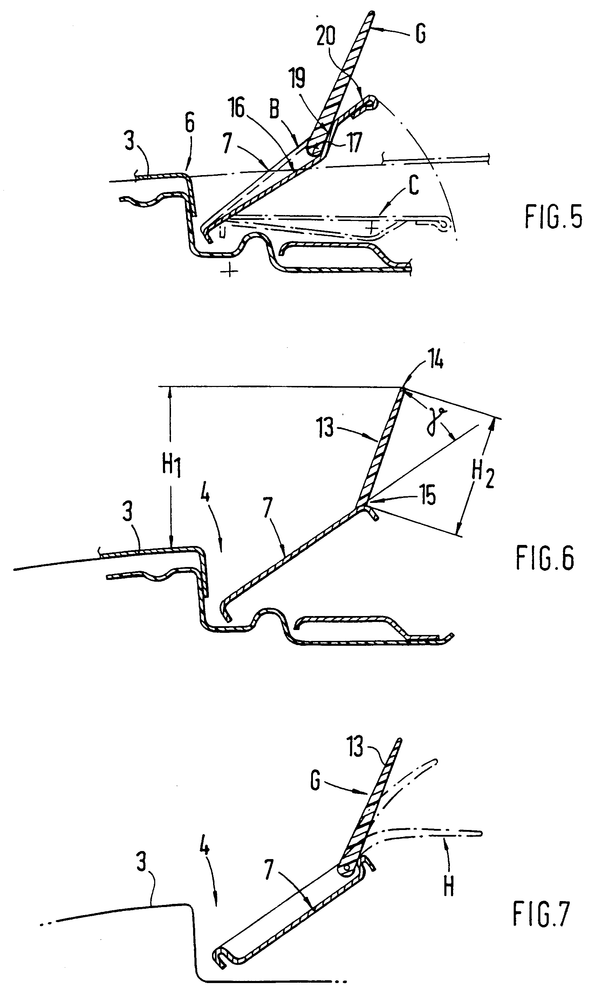

Gemäß Fig. 1 ist das Luftleitelement 13 vorzugsweise im Bereich einer Mittellängsebene D-D des Kraftfahrzeuges 1 angeordnet, wobei sich das Luftleitelement 13 beiderseits dieser Mittellängsebene D-D erstreckt. Es besteht jedoch auch die Möglichkeit, anstelle der mittigen Anordnung benachbart den beiden Längsseiten des Dachausschnittes 4 jeweils ein seitlich außenliegendes Luftleitelement 13 am Windabweiser 7 vorzusehen. Die Abmessungen des Luftleitelementes 13 hängen von der Form des Dachausschnittes 4 und dem schon vorhandenen Windabweiser 7 ab. Die Breite des Luftleitelementes 13 sollte zumindest 1/10 der Breite E des Dachausschnittes 4 betragen. Eine Verbreiterung des Luftleitelementes 13 führt zu keiner Funktionsbeeinträchtigung, wohl aber eine deutliche Verringerung der Breite. In Betriebsstellung B des Windabweisers 7 sollte die Gesamthöhe H1 vom vorderen querverlaufenden Rand 6 des Dachauschnittes 4 bis zu einer Oberkante 14 des Luftleitelementes 13 wenigstens 1/7 der Länge L des Dachausschnittes 4 betragen (Fig. 6). Eine Vergrößerung der Höhen H1 bzw. H2 ist für die Wirkung des Luftleitelements 13 nicht nachteilig, wohl aber eine deutliche Verkürzung. Die Höhe H2 des Luftleitelementes 13 soll etwa 1/10 der Länge L des Dachauschnittes 4 betragen. Um dennoch die Gesamthöhe H1 zu erreichen, muß das Luftleitelement 13 wesentlich steiler als der Windabweiser 7 angestellt sein. Das Luftleitelement 13 nimmt einen Winkel β gegenüber der horizontalen Hilfsebene 9 ein. Der Unterschied (Differenzwinkel γ) dieser beiden Winkel α und β beträgt etwa 30°.

Gemäß einer ersten Ausführungsform (Fig. 6) ist das Luftleitelement 13 fest mit dem Windabweiser 7 verbunden, beispielsweise durch Kleben oder Anvulkanisieren. Das aus Gummi, Kunststoff oder dergleichen gefertigte Luftleitelement 13 ist vom obenliegenden freien Ende 15 des Windabweisers 7 weggeführt. Der Querschnitt des Luftleitelementes 13 verringert sich von unten nach oben hin kontinuierlich und läuft in einen gerundeten oberen Endbereich aus.

Bei einer zweiten Ausführungsform (Fig. 3, 4 und 5) ist das Luftleitelement 13 gelenkig mit einem oberen Endbereich des Windabweisers 7 verbunden. Der Windabweiser 7 weist im Bereich der Breite des Luftleitelementes 13 eine zum Fahrgastraum 12 gerichtete Einprägung (Durchsetzung) 16 auf, in der das eingefahrene Luftleitelement 13 (Stellung F) aufgenommen wird. Die Einprägung 16 ist - in der Höhe gesehen - der Querschnittsform des Luftleitelementes 13 angepaßt. Seitlich verläuft die Einprägung 16 mit Abstand zum Luftleitelement 13. Falls es die räumlichen Gegebenheiten zulassen, kann auf eine Einprägung 16 verzichtet werden, wobei in diesem Falle das eingefahrene Luftleitelement 13 auf dem Windabweiser 7 liegt.

Das Luftleitelement 13 ist über eine horizontal ausgerichtete, querverlaufende Achse 17 gelenkig mit dem Windabweiser 7 verbunden. An beiden Endbereichen des Luftleitelementes 13 ist jeweils ein koaxial angeordnetes Federelement 18 vorgesehen, das das Luftleitelement 13 in Richtung Ausstellen beaufschlagt. Die ausgefahrene Betriebsstellung G des Luftleitelementes 13 wird durch einen schrägverlaufenden Stützbereich 19 des Windabweisers 7 definiert. Der Stützbereich 19 liegt teilweise oberhalb der Achse 17. Der in Fig. 5 dargestellte Windabweiser 7 weist nach dem Stützbereich 19 eine endseitigen Verlängerung 20 auf, wobei diese Verlängerung 20 bewirkt, daß bei höheren Geschwindigkeiten als der kritischen Geschwindigkeit für das Schiebedachwummern keine Erhöhung der Windgeräusche im Fahrgastraum auftritt.

Fig. 7 zeigt ein elastisches Luftleitelement 13, dessen Querschnitt und Materialauswahl so abgestimmt ist, daß das Luftleitelement 13 von einer Stellung G (etwa bei einer Geschwindigkeit V1 ≈ 80 km/h) aufgrund der steigenden Windkraft bei höheren Geschwindigkeiten über Zwischenstellungen in eine etwa horizontale Endstellung H (höhere Geschwindigkeit V2) bewegt wird und umgekehrt.

Da sich das Schiebedachwummern hauptsächlich bei Geschwindigkeiten < 80 km/h einstellt, bei höheren Geschwindigkeiten jedoch nicht mehr auftritt, stellt das Umbiegen des Luftleitelementes 13 keine Funktionsbeeinträchtigung dar; vielmehr werden durch dieses Umbiegen Windgeräusche im Fahrgastraum 12 bei höheren Geschwindigkeiten weitgehend vermieden. Mit einem derartigen Luftleitelement kann auf eine Verlängerung 20 des Windabweisers 7 gemäß Fig. 5 verzichtet werden.

In der Draufsicht gesehen, kann das Luftleitelement 13 entweder rechteckförmig oder gemäß Fig. 2 annähernd trapezförmig ausgebildet sein.

Zur einwandfreien Funktion des Ein- bzw. Ausfahrens ist am vorderen Randbereich des Schiebedeckels 5 von unten her ein Gleitschuh 21 aufgesetzt. Beim Schließen des Schiebedachs wird zuerst der Windabweiser 7 gesenkt, bis der Gleitschuh das Luftleitelement 13 entgegen dem Uhrzeigersinn einschwenkt. Beide Vorgänge laufen parallel bis in die Ruhestellung C.

In eingefahrener Ruhestellung C befindet sich das Luftleitelement 13 zusammengeklappt in der Einprägung 16 des Windabweisers 7 (siehe Fig. 3; Stellung F).

## Patentansprüche

1. Windabweiser (7) für Schiebedächer, herausnehmbare Dachabschnitte oder dergleichen von Kraftfahrzeugen wobei der Windabweiser (7) benachbart einem vorderen querverlaufenden Rand (6) des Dachausschnittes (4) angeordnet und von einer versenkten eingefahrenen Ruhestellung in eine ausgefahrene, hochgestellte Betriebsstellung bewegbar ist**, dadurch gekennzeichnet**, daß am Windabweiser (7) zumindest örtlich ein zusätzliches Luftleitelement (13) geringer Breite angeordnet ist, das in der Betriebsstellung (B) des Windabweisers (7) diesen nach oben hin überragt, wobei das Luftleitelement (13) steiler angestellt ist als der Windabweiser (7).

2. Windabweiser nach Anspruch 1, dadurch gekennzeichnet, daß das Luftleitelement (13) vorzugsweise benachbart einer Mittellängsebene (D-D) des Kraftfahrzeuges (1) vorgesehen ist.

3. Windabweiser nach Anspruch 1, dadurch gekennzeichnet, daß die Breite des Luftleitelementes (13) zumindest 1/10 der Breite des Dachausschnittes (4) betragen soll.

4. Windabweiser nach Anspruch 1, dadurch gekennzeichnet, daß die Gesamthöhe (H1) vom vorderen Rand (6) des Dachausschnittes (4) bis zu einer Oberkante (14) des ausgefahrenen Luftleitelementes (13) wenigstens 1/7 der Länge des Dachausschnittes (4) betragen soll.

5. Windabweiser nach Anspruch 1, dadurch gekennzeichnet, daß die Höhe (H2) des zusätzlichen Luftleitelementes (13) etwa 1/10 der Länge des Dachausschnittes (4) betragen soll.

6. Windabweiser nach Anspruch 1, **dadurch gekennzeichnet**, daß der Differenzwinkel zwischen dem Windabweiser (7) und dem steiler angestellten Luttleitelement (13) etwa 30° beträgt.

7. Windabweiser nach Anspruch 1, dadurch gekennzeichnet, daß das Luftleitelement (13) fest mit dem Windabweiser (7) verbunden ist.

8. Windabweiser nach Anspruch 1, dadurch gekennzeichnet, daß das Luftleitelement (13) gelenkig mit dem Windabweiser (7) verbunden und von einer eingefahrenen Stellung (F) in eine ausgefahrene Betriebsstellung (G) bewegbar ist und umgekehrt.

9. Windabweiser nach Anspruch 1, dadurch gekennzeichnet, daß der durch ein profiliertes Blechteil gebildete Windabweiser (7) im Bereich des Luftleitelementes (13) eine zum Fahrgastraum (12) hin gerichtete Einprägung (16) aufweist, in der das eingefahrene Luftleitelement (13) aufgenommen wird.

10. Windabweiser nach den Ansprüchen 1 und 7, dadurch gekennzeichnet, daß das Luftleitelement (13) über eine horizontal ausgerichtete, querverlaufende Achse (17) gelenkig mit dem Windabweiser (7) verbunden ist, wobei Federelemente (18) das Luftleitelement (13) in Richtung Ausstellen bewegen.

11. Windabweiser nach Anspruch 1, dadurch gekennzeichnet, daß am Windabweiser (7) benachbart seines freien Endes ein Stützbereich (19) vorgesehen ist, der die Betriebsstellung (G) des Luftleitelementes (13) definiert.

12. Windabweiser nach Anspruch 11, dadurch gekennzeichnet, daß der Windabweiser (7) benachbart dem Stützbereich (19) mit einer endseitigen Verlängerung (20) versehen ist, wobei diese Verlängerung (20) mit dem Formverlauf des Windabweisers (7) fluchtet.

13. Windabweiser nach Anspruch 1, dadurch gekennzeichnet, daß an einem vorderen Rand eines Deckels (5) ein Gleitschuh (21) angebracht ist, der beim Schließen des Deckels (5) das Luftleitelement (13) in die eingefahrene Stellung (F) bewegt.

## Claims

1. A wind deflector (7) for sliding roofs, removable roof portions or the like of motor vehicles, wherein the wind deflector (7) is arranged adjacent to a transversely extending front edge (6) of the roof portion (4) and is movable from a lowered retracted rest position into an extended raised operating position, **characterized in that** an additional spoiler device (13), having little width and projecting upwards in the operating position (B) of the wind deflector (7), is arranged on the wind deflector (7) at least locally, the spoiler device (13) being set at a steeper angle than the wind deflector (7).

2. A wind deflector according to Claim 1, **characterized in that** the spoiler device (13) is provided preferably adjacent to a median longitudinal plane (D-D) of the motor vehicle (1).

3. A wind deflector according to Claim 1, **characterized in that** the width of the spoiler device (13) is at least 1/10 of the width of the roof portion (4).

4. A wind deflector according to Claim 1, **characterized in that** the overall height (H1) from the front edge (6) of the roof portion (4) to an upper edge (14) of the extended spoiler device (13) is at least 1/7 of the length of the roof portion (4).

5. A wind deflector according to Claim 1, **characterized in that** the height (H2) of the additional spoiler device (13) is about 1/10 of the length of the roof portion (4).

6. A wind deflector according to Claim 1, **characterized in that** the differential angle between the wind deflector (7) and the spoiler device (13) set at a steeper angle is about 30°.

7. A wind deflector according to Claim 1, **characterized in that** the spoiler device (13) is connected rigidly to the wind deflector (7).

8. A wind deflector according to Claim 1, **characterized in that** the spoiler device (13) is connected in an articulated manner to the wind deflector (7) and is movable from a retracted position (F) into an extended operating position (G) and *vice versa*.

9. A wind deflector according to Claim 1, **characterized in that** in the region of the spoiler device (13) the wind deflector (7) formed by a profiled sheet-metal part has a depressed portion (16) which is directed towards the passenger compartment (12) and in which the retracted spoiler device (13) is received.

10. A wind deflector according to Claims 1 and 7, **characterized in that** the spoiler device (13) is connected in an articulated manner to the wind deflector (7) by way of a horizontally orientated, transversely extending axis (17), wherein spring members (18) move the spoiler device (13) in the opening direction.

11. A wind deflector according to Claim 1, **characterized in that** a support area (19), defining the operating position (G) of the spoiler device (13), is provided on the wind deflector (7) adjacent to the free end thereof.

12. A wind deflector according to Claim 11, **characterized in that** adjacent to the support area (19) the wind deflector (7) is provided with an extension (20) at the end, the said extension (20) being in alignment with the contour of the wind deflector (7).

13. A wind deflector according to Claim 1, **characterized in that** a sliding block (21) is attached to a front edge of a top (5), the sliding block (21) moving the spoiler device (13) into the retracted position (F) as the top (5) is closed.

## Revendications

1. Déflecteur d'air (7) pour toits ouvrants, panneaux amovibles de toits ou similaires de véhicules automobiles, le déflecteur d'air (7) étant disposé au voisinage d'une bordure avant (6) transversale de la découpe de toit (4), et susceptible de se déplacer, d'une position de repos, rétractée à l'intérieur, en une position de fonctionnement déployée et relevée à l'extérieur, caractérisé en ce qu'un élément additionnel de guidage d'air (13) de faible largeur est disposé au moins localement sur le déflecteur d'air et dépasse de celui-ci vers le haut dans la position de fonctionnement (B) du déflecteur d'air (7), l'élément de guidage d'air (13) étant calé à un angle supérieur à celui du déflecteur d'air (7).

2. Déflecteur d'air selon la revendication 1, caractérisé en ce que l'élément de guidage d'air (13) est prévu de préférence au voisinage d'un plan longitudinal médian (D-D) du véhicule automobile (1)..

3. Déflecteur d'air selon la revendication 1, caractérisé en ce que la largeur de l'élément de guidage d'air (13) doit être d'au moins 1/10 de la largeur de la découpe de toit (4).

4. Déflecteur d'air selon la revendication 1, caractérisé en ce que la hauteur totale (H1) entre le bord avant (6) de la découpe de toit (4) et une arête supérieure (14) de l'élément de guidage d'air (13) déployé doit être d'au moins 1/7 de la longueur de la découpe de toit (4).

5. Déflecteur d'air selon la revendication 1, caractérisé en ce que la hauteur (H2) de l'élément de guidage d'air supplémentaire (13) doit être d'au moins à peu près 1/10 de la longueur de la découpe de toit (4).

6. Déflecteur d'air selon la revendication 1, caractérisé en ce que l'angle de différence entre le déflecteur d'air (7) et l'élément de guidage d'air (13) calé à un angle supérieur est d'à peu près 30°.

7. Déflecteur d'air selon la revendication 1, caractérisé en ce que l'élément de guidage d'air (13) est relié rigidement au déflecteur d'air (7).

8. Déflecteur d'air selon la revendication 1, caractérisé en ce que l'élément de guidage d'air (13) est relié articulé au déflecteur d'air (7) et est déplaçable, d'une position rétractée (F) en une position de fonctionnement (G) déployée et inversement.

9. Déflecteur d'air selon la revendication 1, caractérisé en ce que le déflecteur d'air (7) formé au moyen d'une partie en tôle profilée présente dans la zone de l'élément de guidage de l'air (13) une concavité (16) orientée vers l'habitable (12), dans laquelle est logé l'élément de guidage de l'air (13) rétracté.

10. Déflecteur d'air selon les revendications 1 et 7, caractérisé en ce que l'élément de guidage de l'air (13) est relié articulé au déflecteur d'air (7), par l'intermédiaire d'un axe transversal (17), orienté horizontalement, des éléments formant ressort (18) provoquant le déplacement de l'élément de guidage d'air (13) dans la direction du déploiement.

11. Déflecteur d'air selon la revendication 1, caractérisé en ce qu'un zone d'appui (19), définissant la position de fonctionnement (G) de l'élément de guidage de l'air (13), est prévue sur le déflecteur d'air (7), au voisinage de son extrémité libre.

12. Déflecteur d'air selon la revendication 11, caractérisé en ce que le déflecteur d'air (7) est pourvu, au voisinage de la zone d'appui (19), d'un prolongement (20) situé côté extrémité, ce prolongement (20) étant aligné avec l'évolution de la forme du déflecteur d'air (7).

13. Déflecteur d'air selon la revendication 1, caractérisé en ce qu'un patin de glissement (21), déplaçant l'élément de guidage d'air (13) dans la position rétractée (F) lors de la fermeture d'un capot (5) est monté sur un bord avant du capot (5).
